# EUROPÄISCHE PATENTSCHRIFT

(11) **EP 2 867 958 B1**
(45) Veröffentlichungstag und Bekanntmachung des Hinweises auf die Patenterteilung: **22.02.2017**
(21) Anmeldenummer: 12751284.6
(22) Anmeldetag: 06.08.2012
(51) Int. Cl.: H02B 1/052, H01H 71/08, H01R 4/28, H01R 9/26, H02B 1/015

(54) **ELEKTRISCHES GERÄT MIT EINER HUTSCHIENENAUFNAHME UND EINEM LEITERANSCHLUSS**
ELECTRICAL APPARATUS HAVING A TOP-HAT RAIL MOUNT AND A CONDUCTOR CONNECTION
APPAREIL ÉLECTRIQUE COMPORTANT UN LOGEMENT DE PROFILÉ EN CHAPEAU ET UNE CONNEXION DE CONDUCTEUR

(43) Veröffentlichungstag der Anmeldung: 06.05.2015
(73) Patentinhaber: Siemens Aktiengesellschaft, 80333 München (DE)
(72) Erfinder: KÄSBAUER, Peter, 92421 Schwandorf (DE); SEITZ, Johann, 92224 Amberg (DE)
(86) Internationale Anmeldenummer: PCT/EP2012/065349
(87) Internationale Veröffentlichungsnummer: WO 2014/023328

(56) Entgegenhaltungen:
- EP-A1- 0 472 409
- EP-A1- 1 137 035
- WO-A1-93/04514
- DE-A1- 1 942 300

## Beschreibung

Die Erfindung betrifft ein elektrisches Gerät mit einer Hutschienenaufnahme und einem Leiteranschluss mit einer Klemmstelle. Das elektrische Gerät ist insbesondere ein Schaltgerät im Bereich der Niederspannungsschalttechnik.

Aus DE 19 42 300 A1 ist ein Gehäuse für einen elektrischen Schalter bekannt, an dessen Wandung eine Mehrzahl an Kontaktschrauben angeordnet ist. Das Gehäuse ist an einem rückseitigen Wandungsabschnitt einer Haltenase und einem Federglied versehen, die im Zusammenspiel eine lösbare Verbindung mit einer Tragschiene erlauben. Die Verbindung mit der Tragschiene erfolgt durch eine Schwenkbewegung. Im Bereich der Kontaktschrauben sind Kontaktfedern befestigt, die eine elektrische Verbindung ins Innere des Gehäuses herstellen. Die Kontaktfedern und Kontaktschrauben sind schräggestellt und dazu geeignet, mittels einer Vierkantmutter einen elektrischen Leiter aufzunehmen.

Zum vereinfachten Anschließen mehrerer elektrischer Geräte (z.B. mechanische oder elektronische Motorschaltgeräte oder Schütze) an eine Spannungsquelle (z.B. ein 3-Phasen-Drehstromsystem) werden die Geräte oftmals mittels einer Sammelschiene gebündelt an die Spannungsquelle angeschlossen. Die Sammelschiene umfasst hierfür üblicherweise feststehende Kontaktstifte, mittels welchen ein elektrisches Kontaktieren zu den entsprechenden Leiteranschlüssen der Geräte erfolgt. Mittels der Sammelschiene kann die aufwendige Einzelverdrahtung der Geräte entfallen.

Das elektrische Anbinden von Geräten mittels einer Sammelschiene wird auch als Gruppenaufbau bezeichnet. Ein Gruppenaufbau bei Schaltgeräten wird üblicherweise mit einem starren Einspeisesystem (Sammelschiene) durchgeführt. Wesentliche Vorteile eines solchen Systems sind die Reduzierung des Verdrahtungsaufwandes und die Vermeidung von Verdrahtungsfehlern.

Sind einzelne Geräte auf einer Hutschiene befestigt und über eine Sammelschiene angebunden, ist ein entscheidender Nachteil eines solchen Verbundes, dass eine Einzelentnahme eines Geräts oder ein Gerätetausch eines Geräts nur durch eine komplette Demontage der Sammelschiene erfolgen kann, da nur über diesen Umweg die Geräte wieder einzeln von der Hutschiene abgenommen werden können. Liegt beispielsweise ein auf einer Hutschiene befestigter Verbund von fünf Geräten vor und jedes der Geräte ist mit drei Leiteranschlüssen, welche jeweils als Schraubleiteranschluss ausgebildet sind, mit Kontaktstiften der Sammelschiene verbunden, so muss bei einem erforderlichen Gerätetausch eines der fünf Geräte, zunächst die Sammelschiene, demontiert werden. Zum Entfernen der Sammelschiene müssen zunächst 15 Schrauben der Leiteranschlüsse gelöst werden. Nach dem Entfernen der Sammelschiene kann das Gerät getauscht werden und der Verbund muss erneut mit der Sammelschiene verbunden werden. Hierfür müssen alle 15 Schrauben festgezogen werden.

Es ist Aufgabe der vorliegenden Erfindung den Gerätetausch eines mit einer Hutschiene und einer Sammelschiene verbundenen elektrischen Gerätes zu verbessern.

Diese Aufgabe wird gelöst durch eine Vorrichtung gemäß Anspruch 1, d.h. durch ein elektrisches Gerät mit einer Hutschienenaufnahme und einem ersten Leiteranschluss mit einer Klemmstelle, wobei mittels der Klemmstelle ein Leiter fixiert werden kann, wobei das elektrische Gerät mittels einer Drehbewegung um eine Drehachse bei der Hutschienenaufnahme mit einer Hutschiene verbunden werden kann, wobei der erste Leiteranschluss derart ausgebildet und angeordnet ist, dass im verbundenen Zustand des Geräts über seine Hutschienenaufnahme mit der Hutschiene die Längsachse eines im Leiteranschluss aufgenommenen geraden Leiters im Wesentlichen senkrecht zu einer Gerade steht, welche orthogonal zur Drehachse ausgerichtet ist und die Drehachse und die Klemmstelle schneidet.

Erfindungsgemäß ist an einer ersten Seite des elektrischen Geräts die Hutschienenaufnahme angeordnet.

Dabei ist der erste Leiteranschluss auf einer zweiten Seite des elektrischen Geräts angeordnet, die an die erste Seite angrenzt. Die Drehachse ist an einem der zweiten Seite abgewandten Ende der Hutschiene.
Vorteilhafte Weiterbildungen der Erfindung sind in den abhängigen Ansprüchen 2 bis 6 angegeben.

Das mechanische Verbinden des Geräts mit der Hutschiene ist insbesondere eine lösbare Verbindung. Vorzugsweise wird das Gerät auf die Hutschiene verrastet.

Das elektrische Gerät kann über eine erste Drehbewegung um die Drehachse mit der Hutschiene verbunden werden und über eine der ersten Drehbewegung entgegen gesetzten zweiten Drehbewegung um die Drehachse von der Hutschiene gelöst werden.

Die Gerade schneidet insbesondere einen aufgenommenen geraden Leiter im Bereich der Klemmstelle.

Mittels der Klemmstelle kann der Leiter (z.B. ein Kontaktstift einer Sammelschiene) mechanisch fixiert werden. Ferner ist die Klemmstelle mit einer geräteinneren Komponente des Geräts elektrisch leitend verbunden, so dass ein in der Klemmstelle aufgenommener Leiter elektrisch leitend mit der geräteinneren Komponente des Geräts verbunden ist.

Der Begriff im Wesentlichen senkrecht, ist derart zu verstehen, dass der zwischen der Längsachse des geraden Leiters und der gerade gebildete Winkel zwischen 70° und 115°, vorzugsweise bei ca. 90°, liegen.

Der Leiteranschluss, insbesondere dessen Klemmstelle, ist derart ausgebildet und angeordnet, dass im verbundenen Zustand des Geräts über seine Hutschienenaufnahme mit der Hutschiene ein Einführen des geraden Leiters zur Klemmstelle sowie ein Lösen des geraden Leiters von der Klemmstelle aus dem Leiteranschluss über eine im Wesentlichen senkrechten Bewegung des Leiters zu der Geraden erfolgt, welche orthogonal zur Drehachse ausgerichtet ist und die Drehachse und die Klemmstelle schneidet.

Anstelle eines geraden Leiters kann das elektrische Gerät ebenso mit einem Kontaktstift einer Sammelschiene verbunden werden. Der in das Gerät zur Klemmstelle ragende Teil des Kontaktstiftes muss hierbei lediglich eine Längsausstreckung aufweisen, welche im Wesentlichen senkrecht zu der Geraden steht. Mittels der Kontaktstifte einer Sammelschiene kann ein elektrisches Anschließen mehrerer auf derselben Hutschiene befestigter Geräte erfolgen.

Der Leiteranschluss ist vorzugsweise ein Schraubanschluss.

Durch eine derartige Ausbildung und Anordnung des Leiteranschlusses ist ein Lösen des Geräts von der Hutschiene trotz eines räumlich feststehenden Leiters möglich. Ferner ist ein Koppeln des Geräts mit der Hutschiene bei einem bereits räumlich feststehenden Leiter möglich. Ein räumlich feststehender Leiter ist insbesondere ein Leiter, welcher unverändert seine Position in Bezug zu der Hutschiene beibehält. Dies liegt insbesondere dann vor, wenn z.B. eine Sammelschiene bereits mit nebengeordneten Geräten mechanisch verbunden ist.

Der Leiteranschluss ist insbesondere derart ausgebildet und angeordnet, dass die räumliche Position eines im Leiteranschluss aufgenommenen Kontaktstiftes einer Sammelschiene, welche ferner mit einem benachbarten baugleichen Gerät mechanisch verbunden ist, im gekoppelten Zustand der Geräte mit der Hutschiene durch ein Lösen des Gerätes von der Hutschiene beibehalten bleibt.

In einer vorteilhaften Ausführung der Erfindung umfasst der Leiteranschluss eine Leiterzuführung. Über die Leiterzuführung kann der Leiter zu der Klemmstelle geführt werden.

Der erste Leiteranschluss ist derart ausgebildet und angeordnet, dass im verbundenen Zustand des Geräts über seine Hutschienenaufnahme mit der Hutschiene zum elektrischen und mechanischen Verbinden eines Leiters mit der Klemmstelle des ersten Leiteranschlusses der Leiter über die gesamte Leiterzuführung (d.h. vom Gehäuseäußeren des Geräts bis zur Klemmstelle) in die Klemmstelle mittels einer im Wesentlichen senkrechten Bewegung zu der Gerade, welche orthogonal zur Drehachse ausgerichtet ist und die Drehachse und die Klemmstelle schneidet, führbar ist.

Zum mechanischen und elektrischen Verbinden des Leiters mit der Klemmstelle ist die Bewegungsrichtung des Leiters im Wesentlichen senkrecht zu der Gerade, d.h. der Winkel zwischen der Längsachse des Leiters, welcher zur Klemmstelle geführt ist, und der Geraden liegt zwischen 70° und 115°, insbesondere bei ca. 90°.

An der zweiten Seite des Geräts, welche an die erste Seite des Geräts angrenzt, ist der erste Leiteranschluss vorzugsweise derart angeordnet, dass ein Zuführen des Leiters in den ersten Leiteranschluss über die zweite Seite erfolgt. Die Öffnung der Leiterzuführung befindet sich somit an der zweiten Seite.

Die zweite Seite ist insbesondere senkrecht zur ersten Seite angeordnet.

Die Längsachse eines aufgenommenen geraden Leiters im Leiteranschluss ist insbesondere schräg zur ersten und zweiten Seite des Geräts gestellt.

Ein im Leiteranschluss aufgenommener gerader Leiter ragt insbesondere mit einem Winkel zwischen 35° bis 80°, insbesondere ca. 60°, aus der zweiten Seite heraus.

Die Bewegungsrichtung des beim Fixieren oder Lösen der Klemmstelle des Leiteranschlusses durchgeführten Hubs ist insbesondere parallel zur Gerade ausgerichtet und liegt vorzugsweise in der Flucht der Geraden.

Die Klemmstelle wird vorzugsweise mittels einer Schraube betätigt. Die Schraube ist vorzugsweise schräg zur ersten und zweiten Seite des Geräts gestellt. Insbesondere ist die Längsachse der Schraube parallel zur Geraden ausgerichtet und liegt vorzugsweise in der Flucht der Geraden.

In einer weiteren vorteilhaften Ausführungsform der Erfindung umfasst das elektrische Gerät einen weiteren ersten Leiteranschluss mit einer Klemmstelle, wobei der weitere erste Leiteranschluss derart ausgebildet und angeordnet ist, dass im verbundenen Zustand des Geräts über seine Hutschienenaufnahme mit der Hutschiene die Längsachse eines im weiteren ersten Leiteranschluss aufgenommenen geraden Leiters im Wesentlichen senkrecht zu einer Gerade steht, welche orthogonal zur Drehachse ausgerichtet ist und die Drehachse und die Klemmstelle des weiteren ersten Leiteranschlusses schneidet. Das Zuführen des Leiters in den weiteren ersten Leiteranschluss erfolgt über die zweite Seite und die Klemmstellen der ersten Leiteranschlüsse weisen jeweils denselben Abstand zur Drehachse auf. Der betrachtete Abstand ist insbesondere jeweils der geringste mögliche Abstand zwischen der Klemmstelle und der Drehachse.

Der weitere erste Leiteranschluss ist folglich seitlich versetzt zum ersten Leiteranschluss angeordnet. Der Abstand der ersten Leiteranschlüsse zur ersten Seite des Gerätes ist vorzugsweise gleich.

Der weitere erste Leiteranschluss ist vorzugsweise baugleich zum ersten Leiteranschluss ausgebildet. Er kann somit ebenso eine Leiterzuführung umfassen.

Das Gerät weist vorzugsweise drei baugleiche erste Leiteranschlüsse auf, welcher seitlich versetzt zueinander angeordnet sind. Der Abstand der einzelnen Leiteranschlüsse zur Drehachse ist gleich.

In einer weiteren vorteilhaften Ausführungsform der Erfindung umfasst das elektrische Gerät einen zweiten Leiteranschluss mit einer Klemmstelle, wobei der zweite Leiteranschluss derart ausgebildet und angeordnet ist, dass im verbundenen Zustand des Geräts über seine Hutschienenaufnahme mit der Hutschiene die Längsachse eines im zweiten Leiteranschluss aufgenommenen geraden Leiters im Wesentlichen senkrecht zu einer Gerade steht, welche orthogonal zur Drehachse ausgerichtet ist und die Drehachse und die Klemmstelle des zweiten Leiteranschlusses schneidet. Das Zuführen des Leiters in den zweiten Leiteranschluss erfolgt über die zweite Seite. Der Abstand der Klemmstelle des zweiten Leiteranschlusses zur Drehachse ist ungleich dem Abstand der Klemmstelle des ersten Leiteranschlusses zur Drehachse. Der betrachtete Abstand ist insbesondere jeweils der geringste mögliche Abstand zwischen der Klemmstelle und der Drehachse.

Der zweite Leiteranschluss ist vorzugsweise baugleich zum ersten Leiteranschluss ausgebildet. Der zweite Leiteranschluss kann somit ebenso eine Leiterzuführung umfassen.

Der zweite Leiteranschluss, insbesondere dessen Leiterzuführung und/oder Klemmstelle, ist weiter von der ersten Seite oder der Drehachse des Geräts beabstandet, als der erste Leiteranschluss bzw. dessen Leiterzuführung und/oder Klemmstelle.

In einer weiteren vorteilhaften Ausführungsform der Erfindung ist das Gerät ein Schaltgerät, insbesondere ein Sanftstarter, Motorstarter, Motorschaltgerät, Schütz oder Relais.

Vorzugsweise erfolgt über den Leiteranschluss des Geräts bzw. über die Leiteranschlüsse des Geräts eine Energieversorgung eines nachgeschalteten Verbrauchers, insbesondere eines Elektromotors. Vorzugsweise kann mittels des Geräts die Energieversorgung zum nachgeschalteten Verbraucher gesteuert werden.

Vorzugsweise sind über drei Leiteranschlüsse (erste und/oder zweite Leiteranschlüsse) die Energieversorgung eines nachgeschalteten Verbrauchers (z.B. ein 3-phasiger Elektromotor) führbar.

In einer weiteren vorteilhaften Ausführungsform der Erfindung umfasst ein System eine Sammelschiene mit Kontaktstiften und ein erstes und ein zweites elektrischen Gerät gemäß einem der Ansprüche 1 bis 5.

Das erste und zweite Gerät kann jeweils über die Hutschienenaufnahme mit derselben Hutschiene befestigt werden, so dass die beiden Geräte nebeneinander auf der Hutschiene angeordnet sind. Daraufhin können der erste Leiteranschluss bzw. die ersten Leiteranschlüsse des ersten und zweiten Geräts jeweils mit einem der Kontaktstifte der Sammelschiene direkt verbunden werden. Sofern die zweite Seite senkrecht zur Hutschiene ausgerichtet ist, ragen die aufgenommenen Kontaktstifte in Bezug zur zweiten Seite des jeweiligen Geräts schräg in den jeweiligen Leiteranschluss hinein. Die Längsachse des im Leiteranschluss aufgenommenen Kontaktstifts ragt insbesondere mit einem Winkel zwischen 35° bis 80°, insbesondere ca. 55°, aus der zweiten Seite heraus.

Sofern vorhanden ist der zweite Leiteranschluss der Geräte vorzugsweise ebenso mit einem Kontaktstift der gleichen oder einer weiteren zweiten Sammelschiene direkt verbunden. Die Kontaktstifte der Sammelschiene ragen ebenso zur zweiten Seite schräg in den jeweiligen zweiten Leiteranschluss hinein.

Der erste und sofern vorhanden zweite Leiteranschluss der Geräte ist derart angeordnet und ausgebildet ist, dass das erste oder zweite Gerät von der Hutschiene gelöst werden kann, ohne dass beide Geräte von der Hutschiene gelöst werden müssen und ohne dass die Sammelschiene/-n von beiden Geräten entfernt werden muss/müssen.

Sind beide Geräte mit der Hutschiene und einer Sammelschiene verbunden und soll z.B. das zweite Gerät getauscht werden, so muss nicht das gesamte System (erstes und zweites Gerät) von der Hutschiene demontiert werden. Ferner muss nicht die Sammelschiene von beiden Geräten gelöst werden. Es genügt, die mechanische Fixierung des Kontaktstiftes/der Kontaktstifte der Sammelschiene am zweiten Gerät zu lösen. Das zweite Gerät kann daraufhin über dessen Drehachse von der Hutschiene gedreht werden, so dass die mechanische Verbindung zur Hutschiene gelöst wird. Die Sammelschiene mit ihren Kontaktstiften verweilt während dieser Zeit unverändert in ihrer Position, da sie weiterhin durch das erste Gerät gehalten wird. Nachdem das zweite Gerät entfernt wurde kann ein neues baugleiches zweites Gerät mit der Hutschiene verbunden werden. Über den Rastvorgang mit der Hutschiene werden automatisch die der Sammelschiene zugeordneten Leiteranschlüsse des neuen baugleichen Gerätes auf die Kontaktstifte der Sammelschiene bewegt. Erfolgt die Betätigung der Klemmstellen mittels einer Schraube, so muss nach dem mechanischen Befestigen des zweiten Geräts auf der Hutschiene lediglich die Schraube der jeweiligen Klemmstelle betätigt werden, so dass die Kontaktstifte mechanisch fixiert werden.

Soll ein weiteres baugleiches Gerät mit der Sammelschiene verbunden werden, so muss das weitere Gerät lediglich auf der Hutschiene befestigt werden. Gegebenenfalls muss eine anschließende Fixierung der Kontaktstifte der Sammelschiene mit den Klemmstellen des Geräts erfolgen.

Die Kontaktstifte der Sammelschiene sind insbesondere feststehende Kontaktstifte.

In einer vorteilhaften Ausführung der Erfindung liegt die Drehachse des Geräts auf der oberen Auflage der Hutschiene für die Hutschienenaufnahme.

Im Folgenden werden die Erfindung und Ausgestaltungen der Erfindung anhand der in den Figuren dargestellten Ausführungsbeispiele näher beschrieben und erläutert. Es zeigen:
- FIG 1: eine schematische Darstellung einer Seitenansicht eines Geräts, welches auf einer Hutschiene befestigt ist und einen geraden Leiter aufgenommen hat,
- FIG 2: eine schematische Darstellung eines Systems aus fünf Geräten gemäß der FIG 1, welche auf derselben Hutschiene befestigt sind und über eine Sammelschiene kontaktiert sind,
- FIG 3: eine schematische Darstellung einer Seitenansicht des Systems gemäß FIG 2, wobei das vordere Gerät von der Hutschiene gelöst ist, und
- FIG 4: eine perspektivische Darstellung des Systems der FIG 3.

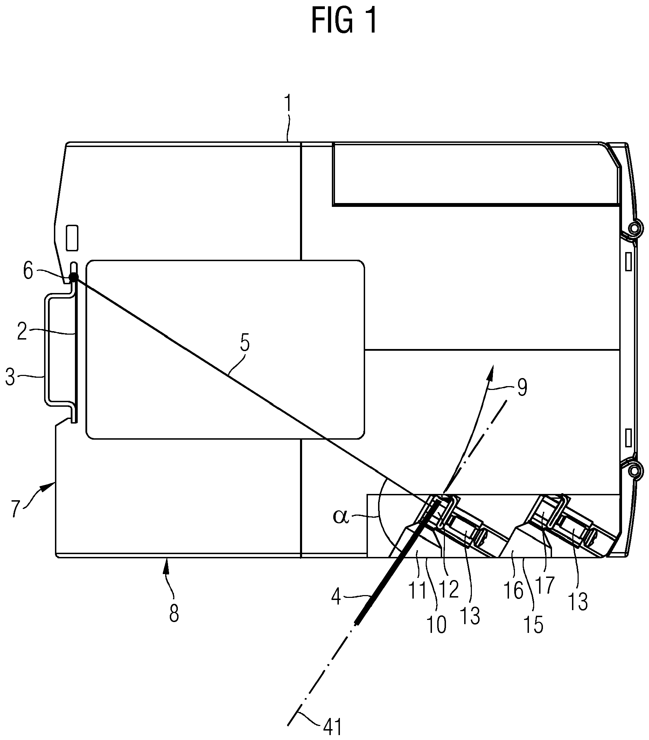

FIG 1 zeigt eine schematische Darstellung einer Seitenansicht eines Geräts 1, welches auf einer Hutschiene 3 befestigt ist und einen geraden Leiter 4 aufgenommen hat. Das elektrische Gerät 1 umfasst eine Hutschienenaufnahme 2, mittels welcher das Gerät 1 auf der Hutschiene 3 befestigt ist, einen ersten Leiteranschluss 10 und einen zweiten Leiteranschluss 15. Zur verbesserten Darstellung ist der Bereich des ersten und zweiten Leiteranschlusses 10,15 des Geräts 1 im Schnitt dargestellt, so dass die Zuführung und Fixierung des Leiters 4 im ersten Leiteranschluss ersichtlich ist. Das elektrische Gerät 1 ist in diesem Ausführungsbeispiel ein Motorstarter und der erste und zweite Leiteranschluss 10,15 ist jeweils ein Schraubanschluss für einen Leiter 4.

Der erste Leiteranschluss 10 umfasst eine Leiterzuführung 11, eine Klemmstelle 12 und eine Schraube 13, mittels welcher die Klemmstelle 12 betätigt werden kann. Der zweite Leiteranschluss 15 umfasst eine Leiterzuführung 16, eine Klemmstelle 17 und eine Schraube 13, mittels welcher die Klemmstelle 17 betätigt werden kann.

Über die jeweilige Leiterzuführung 11,16 kann jeweils ein Leiter (z.B. ein Kontaktstift einer Sammelschiene) in die zugehörige Klemmstelle 12,17 des Leiteranschlusses 11,15 geführt werden. Mittels der Klemmstelle 12,17 kann der zugeführte Leiter mechanisch fixiert werden. Hierfür muss die Schaube 13 des jeweiligen Leiteranschlusses 11,15 angezogen werden. Über die Klemmstelle 12,17 erfolgt eine elektrisch leitende Verbindung des Leiters zu einer geräteinneren Komponente des Geräts 1. Insbesondere wird ein Versorgungsstrang eines dem Gerät 1 nachgeschalteten Verbrauchers am ersten

und/oder zweiten Leiteranschluss 11,15 angeschlossen. Zur verbesserten Darstellung ist lediglich ein gerader Leiter 4 im ersten Leiteranschluss 11 aufgenommen. Der zweite Leiteranschluss ist analog zum ersten Leiteranschluss aufgebaut und kann in gleicher Weise einen geraden Leiter aufnehmen. Der zweite Leiteranschluss 15 ist lediglich weiter von der Hutschienenaufnahme 2 beabstandet als der erste Leiteranschluss 11. Der erste und zweite Leiteranschluss 10,15 kann ebenso einen ungeraden Leiter aufnehmen. Es muss lediglich die Ausrichtung des im Leiteranschluss 10,15 aufgenommenen Teils des Leiters analog zur Ausrichtung des geraden Leiters ausgebildet sein.

Die Hutschienenaufnahme 2 erstreckt sich über die erste Seite 7 des Gerätes 1. Die erste Seite 7 ist die Fläche des Gehäusebodens des Gerätes 1.

Die Zuführung eines Leiters in den ersten und zweiten Leiteranschluss 10,15 sowie das Betätigen der Klemmstelle 12,17 (hier mittels einer Schraube 17) erfolgt über die zweite Seite 8 des Gerätes 1. Die zweite Seite 8 ist senkrecht zur Hutschiene 3, zur Hutschienenaufnahme 2 und zur ersten Seite 7 ausgerichtet und grenzt unmittelbar an die erste Seite 7 an.

Das elektrische Gerät 1 kann über eine erste Drehbewegung um eine Drehachse 6 mit der Hutschiene 3 verbunden werden. Das mechanische Verbinden des Geräts 1 mit der Hutschiene 3 ist eine lösbare Verbindung. Zum Lösen des Geräts 1 von der Hutschiene 3 muss das Gerät 1 mittels einer der ersten Drehbewegung entgegen gesetzten zweiten Drehbewegung 9 um die Drehachse 6 gedreht werden. Die Drehachse 6 ist parallel zur Hutschiene 3 ausgerichtet und liegt auf der Oberkante der Hutschiene 3.

Der erste Leiteranschluss 10 hat den geraden Leiter 4 aufgenommen, so dass eine elektrische Verbindung zwischen dem Leiter 4 und der Klemmstelle 12 des ersten Leiteranschlusses 10 vorliegt. Zur mechanischen Verbindung müsste lediglich die Schraube 13 des ersten Leiteranschlusses 10 betätigt werden.

Der erste Leiteranschluss 10 ist derart ausgebildet und derart am Gerät 1 angeordnet, dass im verbundenen Zustand des Geräts 1 über seine Hutschienenaufnahme 2 mit der Hutschiene 3 (der in FIG 1 dargestellte Zustand) die Längsachse 41 des im ersten Leiteranschluss 10 aufgenommenen geraden Leiters 4 im Wesentlichen senkrecht zu einer Gerade 5 steht, welche orthogonal zur Drehachse 6 ausgerichtet ist und die Drehachse 6 und die Klemmstelle 12, insbesondere den aufgenommenen fixierten geraden Leiter 4 im Bereich der Klemmstelle 12, schneidet.

Der Begriff im Wesentlichen senkrecht ist derart zu verstehen, dass der Winkel α zwischen der Längsachse 41 des Leiters 4 und der Gerade 5 zwischen 70° und 115° liegt. In diesem Ausführungsbeispiel liegt der Winkel α zwischen der Längsachse 41 und der Gerade 5 bei ca. 90°.

Der zweiten Leiteranschluss 15 ist analog zum ersten Leiteranschluss 10 ausgebildet, er ist somit derart ausgebildet und angeordnet, dass im verbundenen Zustand des Geräts 1 über seine Hutschienenaufnahme 2 mit der Hutschiene 3 die Längsachse eines im zweiten Leiteranschluss 15 aufgenommenen geraden Leiters im Wesentlichen senkrecht zu einer Gerade steht, welche orthogonal zur Drehachse 6 ausgerichtet ist und die Drehachse 6 und die Klemmstelle 17 des zweiten Leiteranschlusses 15 schneidet. Das Zuführen des Leiters in den zweiten Leiteranschluss 15 erfolgt über die zweite Seite 8 und der Abstand der Klemmstelle 17 des zweiten Leiteranschlusses 15 zur Drehachse 6 ist ungleich dem Abstand der Klemmstelle 12 des ersten Leiteranschlusses 10 zur Drehachse 6.

Durch die gewählte geometrische Anordnung und Ausbildung der Leiteranschlüsse 10, insbesondere deren Leiterzuführung und Klemmstelle für die anzuschließenden Leiter, ist es möglich einzelne Geräte 1 durch eine Drehbewegung um die Drehachse 6 aus dem System zu lösen, ohne dass eine komplette Demontage der Sammelschiene 14 aus dem Verbund erforderlich ist. Es müssen lediglich die Schrauben an der einen Leiter aufgenommenen Klemmenstelle des zu lösenden Geräts 1 gelöst werden um das Gerät 1 zu tauschen.

Der Leiter/Kontaktstift des jeweiligen Leiteranschlusses kann somit in seiner räumlichen Position verweilen. Ein Lösen des Geräts 1 von der Hutschiene 3 sowie ein Koppeln des Geräts 1 mit der Hutschiene 3 ist trotz eines feststehenden Leiters 4 möglich.

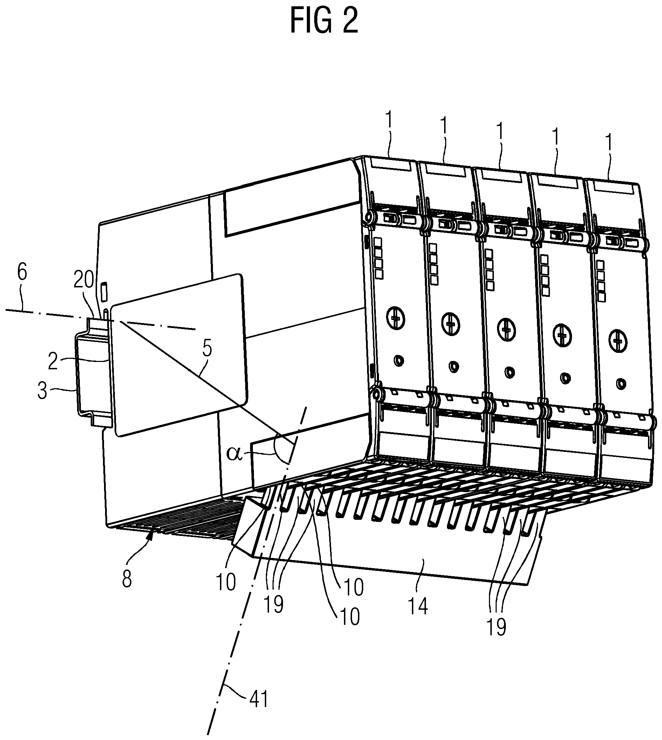

FIG 2 zeigt eine schematische Darstellung eines Systems aus fünf Geräten 1 gemäß der FIG 1, welche auf derselben Hutschiene 3 befestigt sind und über eine Sammelschiene 14 kontaktiert sind. Die Geräte 1 wurden jeweils über eine Drehachse 6 auf die Hutschiene geschwenkt, so dass eine mechanische Fixierung der Geräte 1 mittels deren Hutschienenaufnahme 2 auf der Hutschiene 3 vorliegt. Die Drehachse 6 der Hutschiene 3 wird durch die Oberkante 20 der Hutschiene 3 definiert. Insbesondere liegt die Drehachse 6 der Hutschiene 3 auf der Oberkante 20.

Die einzelnen Geräte 1 weisen jeweils drei erste Leiteranschlüsse 10 und drei zweite Leiteranschlüsse auf. Die drei ersten Leiteranschlüsse 10 sind seitlich versetzt zueinander angeordnet und weisen jeweils einen gleichen Abstand zur ersten Seite des Geräts 1 und zur Drehachse 6 auf. Die drei zweiten Leiteranschlüsse sind seitlich versetzt zueinander angeordnet und weisen jeweils einen gleichen Abstand zur ersten Seite des Geräts 1 und zur Drehachse 6 auf. Die zweiten Leiteranschlüsse sind weiter von der Drehachse 6 beabstandet als die ersten Leiteranschlüsse 10.

Die ersten Leiteranschlüsse 10 der Geräte sind seitlich versetzt zueinander angeordnet und weisen jeweils einen gleichen Abstand zur Drehachse 6 auf.

Das elektrische Kontaktieren der ersten Leiteranschlüsse 10 der Geräte 1 erfolgt mittels der Sammelschiene 14. Die Sammelschiene 14 umfasst hierfür einzelne feststehende Kontaktstifte 19, welche teilweise von einem elektrischen Isolationsmaterial umgeben sind. Mittels der feststehenden Kontaktstifte 19 ist ein elektrischer Kontakt zum jeweiligen Leiteranschluss herstellbar. Die Sammelschiene erleichtert das Anschließen mehrerer parallel angeschlossener Geräte 1, z.B. mittels der Hutschiene 3, da anstelle einer aufwendigen Einzelverdrahtung lediglich die Sammelschiene 14 mit den Geräten 1 mechanisch und elektrisch verbunden werden muss.

Der Winkel α zwischen der Längsachse 41 des in den Leiteranschluss 10 hineinragenden Teils des jeweiligen Kontaktstiftes 19 und der Gerade 5, welche orthogonal zur Drehachse 6 ausgerichtet ist und die Drehachse 6 und die Klemmstelle schneidet, liegt zwischen 70° und 115°. In diesem Ausführungsbeispiel liegt der Winkel α zwischen der Längsachse 41 und der Gerade 5 bei ca. 90°.

Dadurch, dass die Kontaktstifte 19 schräg in die zweite Seite 8 der Geräte 1 hineinragen, kann eines der Geräte 1 von der Hutschiene 3 gelöst werden, ohne dass die Sammelschiene 14 von allen Geräten 1 gelöst werden muss.

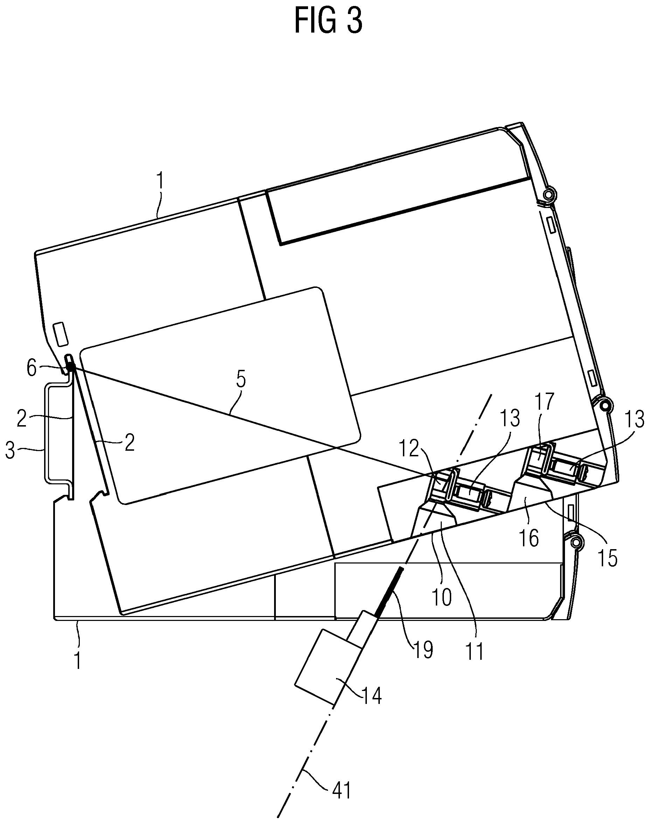

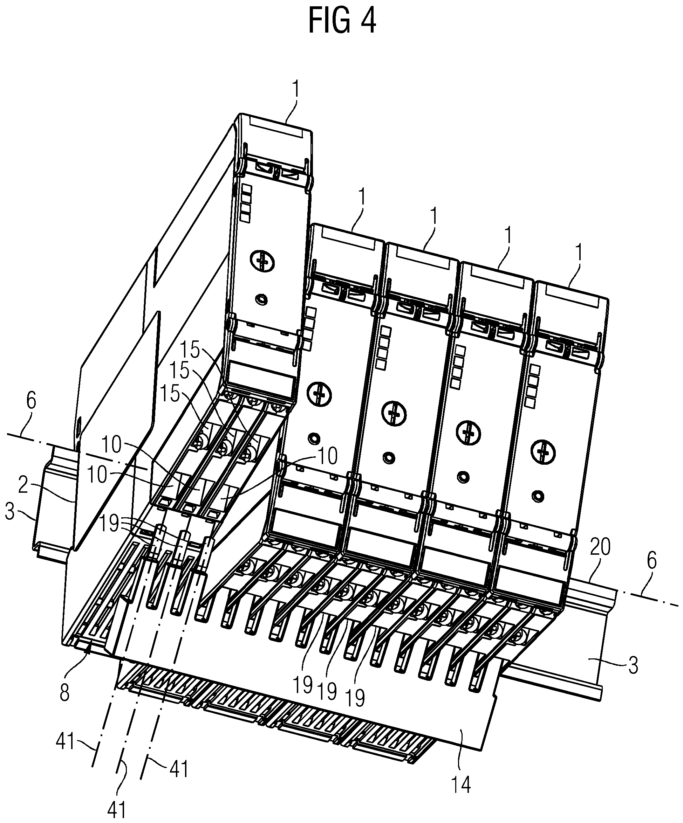

FIG 3 zeigt eine schematische Darstellung einer Seitenansicht des Systems gemäß FIG 2 wobei das vordere Gerät 1 von der Hutschiene 3 gelöst ist. FIG 4 zeigt eine perspektivische Darstellung des Systems der FIG 3. Bei der FIG 4 ist zu erkennen, dass jedes der Geräte 1 an der zweiten Seite 8 drei seitlich versetzt zueinander angeordnete erste Leiteranschlüsse 10 und drei seitlich versetzt zueinander angeordnete zweite Leiteranschlüsse 15 aufweist.

Durch die geometrische Ausbildung und Anordnung der ersten und zweiten Leiteanschlüsse 10,15 kann das Geräte 1 von der Hutschiene 3 gelöst werden, ohne dass die Sammelschiene 14 von allen Geräten 1 gelöst werden muss. Zum Lösen eines der Geräte 1 von der Hutschiene 3 müssen lediglich die mechanischen Fixierungen der Kontaktstifte 19 an den Klemmstellen des zu lösenden Gerätes 1 gelöst werden. Anschließend kann das Gerät 1 mittels einer Drehbewegung um seine Drehachse 6 von der Hutschiene 3 gelöst werden. Das Gerät 1 kann nun beispielsweise getauscht werden. Zum Verbinden eines neuen Geräts mit der Hutschiene 3 muss dieses lediglich über dessen Drehachse 6 auf die Hutschiene 3 geschwenkt werden. Die feststehende Kontaktstifte 19 kontaktieren automatisch die zugehörigen Kontaktstellen des eingeschwenkten Geräts. Die Sammelschiene 14 kann während des Gerätetauschs stets mit den anderen Geräten 1 verbunden bleiben. Hierdurch ergibt sich eine erhebliche Aufwandsreduzierung seitens des Installateurs, da ein Lösen der Sammelschiene 14 von allen Geräten 1 nicht erforderlich ist.

Die geometrische Anordnung der Leiteranschlüsse, insbesondere deren Leiterzuführung für die anzuschließenden Leiter, ist derart gewählt, dass die Längsache eines aufgenommenen Leiters tangential zum Lösekreis (Kreis dessen Mittelpunkt auf der Drehachse 6 liegt und dessen Radius die Länge der Gerade 5 ist) liegt. Durch eine derartige Anordnung ist durch eine Drehbewegung um die obere Auflage 20 der Hutschiene 3 eine Demontage des Gerätes 1 aus dem Verbund möglich, ohne dass die Sammelschiene 14 bei anderen Geräten 1 entfernt werden muss.

## Patentansprüche

1. Elektrisches Gerät (1) mit einer Hutschienenaufnahme (2) auf einer ersten Seite (7) und einem ersten Leiteranschluss (10) mit einer Klemmstelle (12), wobei mittels der Klemmstelle (12) ein Leiter (4,19) fixiert werden kann, wobei das elektrische Gerät (1) mittels einer Drehbewegung um eine Drehachse (6) bei der Hutschienenaufnahme (2) mit einer Hutschiene (3) verbunden werden kann,
wobei der erste Leiteranschluss (10) auf einer zweiten Seite (8) des elektrischen Geräts (1) derart ausgebildet und angeordnet ist, dass im verbundenen Zustand des Geräts (1) über seine Hutschienenaufnahme (2) mit der Hutschiene (3) die Längsachse (41) eines im ersten Leiteranschluss (10) aufgenommenen geraden Leiters (4,19) im Wesentlichen senkrecht zu einer Gerade (5) steht, welche orthogonal zur Drehachse (6) ausgerichtet ist und die Drehachse (6) und die Klemmstelle (12) schneidet, wobei die zweite Seite (8) an die erste Seite (7) angrenzt,
**dadurch gekennzeichnet, dass**
die Drehachse(6) an einem der zweiten Seite (8) abgewandten Ende der Hutschiene (3) liegt.

2. Elektrisches Gerät (1) nach Anspruch 1, wobei der erste Leiteranschluss (10) derart angeordnet ist, dass das Zuführen des Leiters (4,19) in den ersten Leiteranschluss (10) über die zweite Seite (8) erfolgt.

3. Elektrisches Gerät (1) nach Anspruch 2, wobei das elektrische Gerät (1) einen weiteren ersten Leiteranschluss (10) mit einer Klemmstelle (12) umfasst, wobei der weitere erste Leiteranschluss (10) derart ausgebildet und angeordnet ist, dass im verbundenen Zustand des Geräts (1) über seine Hutschienenaufnahme (2) mit der Hutschiene (3) die Längsachse (41) eines im weiteren ersten Leiteranschluss (10) aufgenommenen geraden Leiters (4,19) im Wesentlichen senkrecht zu einer Gerade (5) steht, welche orthogonal zur Drehachse (6) ausgerichtet ist und die Drehachse (6) und die Klemmstelle (12) des weiteren ersten Leiteranschlusses (10) schneidet, wobei ein Zuführen des Leiters (4,19) in den weiteren ersten Leiteranschluss (10) über die zweite Seite (8) erfolgt und die Klemmstellen (12) der ersten Leiteranschlüsse (10) denselben Abstand zur Drehachse (6) aufweisen.

4. Elektrisches Gerät (1) nach einem der Ansprüche 2 bis 3, wobei das elektrische Gerät (1) einen zweiten Leiteranschluss (15) mit einer Klemmstelle (17) umfasst, wobei der zweite Leiteranschluss (15) derart ausgebildet und angeordnet ist, dass im verbundenen Zustand des Geräts (1) über seine Hutschienenaufnahme (2) mit der Hutschiene (3) die Längsachse (41) eines im zweiten Leiteranschluss (15) aufgenommenen geraden Leiters im Wesentlichen senkrecht zu einer Gerade steht, welche orthogonal zur Drehachse (6) ausgerichtet ist und die Drehachse (6) und die Klemmstelle (17) des zweiten Leiteranschlusses (15) schneidet, wobei ein Zuführen des Leiters in den zweiten Leiteranschluss (15) über die zweite Seite (8) erfolgt und der Abstand der Klemmstelle (17) des zweiten Leiteranschlusses (15) zur Drehachse (6) ungleich dem Abstand der Klemmstelle (12) des ersten Leiteranschlusses (10) zur Drehachse (6) ist.

5. Elektrisches Gerät (1) nach einem der vorhergehenden Ansprüche, wobei das Gerät (1) ein Schaltgerät ist.

6. System mit einer Sammelschiene (14) mit Kontaktstiften (19) und einem ersten und einem zweiten Gerät (1) gemäß einem der Ansprüche 1 bis 5.

## Claims

1. Electrical device (1) with a top-hat rail mount (2) on a first side (7) and a first conductor connector (10) with a clamping point (12), where a conductor (4,19) can be fixed by means of the clamping point (12), where the electrical device (1) can be joined to a top-hat rail (3) by means of a rotational movement about an axis of rotation (6) at the top-hat rail mount (2),
wherein the first conductor connector (10) on a second side (8) of the electrical device (1) is shaped and arranged in such a way that in the state where the device (1) is joined to the top-hat rail (3) by means of its top-hat rail mount (2), the longitudinal axis (41) of a straight conductor (4,19) which is accommodated in the first conductor connector (10) is essentially perpendicular to a straight line (5) which is aligned orthogonally to the axis of rotation (6) and passes through the axis of rotation (6) and the clamping point (12), wherein the second side (8) abuts the first side (7),
**characterised in that**
the axis of rotation (6) lies on an end of the top-hat rail (3) facing away from the second side (8).

2. Electrical device (1) according to claim 1, wherein the first conductor connector (10) is arranged in such a way that the conductor (4,19) is inserted into the first conductor connector (10) via the second side (8).

3. Electrical device (1) according to claim 2, wherein the electrical device (1) comprises a further first conductor connector (10) with a clamping point (12), wherein this further first conductor connector (10) is shaped and arranged in such a way that, in the state where the device (1) is joined to the top-hat rail (3) by means of its top-hat rail mount (2), the longitudinal axis (41) of a straight conductor (4,19) which is accommodated in the further first conductor connector (10) is essentially perpendicular to a straight line (5) which is aligned orthogonally to the axis of rotation (6), and passes through the axis of rotation (6) and the clamping point (12) of the further first conductor connector (10), wherein the conductor (4,19) is inserted into the further first conductor connector (10) via the second side (8) and the clamping points (12) for the first conductor connectors (10) are at the same distance from the axis of rotation (6).

4. Electrical device (1) according to one of claims 2 to 3, wherein the electrical device (1) comprises a second conductor connector (15) with a clamping point (17), wherein the second conductor connector (15) is shaped and arranged in such a way that in the state where the device (1) is joined to the top-hat rail (3) by means of its top-hat rail mount (2), the longitudinal axis (41) of a straight conductor which is accommodated in the second conductor connector (15) is essentially perpendicular to a straight line which is aligned orthogonally to the axis of rotation (6) and passes through the axis of rotation (6) and the clamping point (17) of the second conductor connector (15), wherein the conductor is inserted into the second conductor connector (15) via the second side (8) and the distance from the clamping point (17) of the second conductor connector (15) to the axis of rotation (6) is not the same as the distance from the clamping point (12) of the first conductor connector (10) to the axis of rotation (6).

5. Electrical device (1) according to one of the preceding claims, wherein the device (1) is a switching device.

6. System with a busbar (14) having contact pins (19), and a first and a second device (1) according to one of claims 1 to 5.

## Revendications

1. Appareil (1) électrique ayant un logement (2) de profilé en chapeau d'un premier côté (7), et une borne (10) de conducteur ayant un point (12) de serrage, un conducteur (4, 19) pouvant être immobilisé au moyen du point (12) de serrage, l'appareil (1) électrique pouvant, au moyen d'un mouvement de rotation autour d'un axe (6) de rotation, être dans le logement (2) de profilé en chapeau, relié à un profilé (3) en chapeau,
dans lequel la première borne (10) de conducteur est disposée d'un deuxième côté (8) de l'appareil (1) électrique de manière à ce que, lorsque l'appareil (1) est à l'état relié avec le profilé (3) en chapeau par son logement (2) de profilé en chapeau, l'axe (41) longitudinal d'un conducteur (4, 19) rectiligne, reçu dans la première borne (10) de conducteur, soit sensiblement perpendiculaire à une droite (5) qui est orthogonale à l'axe (6) de rotation et l'axe (6) de rotation et le point (12) de serrage se coupent, le deuxième côté (8) étant adjacent au premier côté (7),
**caractérisé en ce que**
l'axe (6) de rotation se trouve à une extrémité du profilé (3) en chapeau éloignée du deuxième côté (8).

2. Appareil électrique (1) suivant la revendication 1, dans lequel la première borne (10) de conducteur est constituée et disposée de manière à ce que l'arrivée du conducteur ( 4, 19 ) dans la première borne (10) de conducteur s'effectue par le deuxième côté (8).

3. Appareil électrique (1) suivant la revendication 2, dans lequel l'appareil (1) électrique comprend une autre première borne (10) de conducteur ayant un point (12) de serrage, l'autre première borne (10) de conducteur étant constituée et disposée de manière à ce que, lorsque l'appareil (1) est à l'état relié avec le profilé (3) en chapeau par son logement (2) de profilé en chapeau, l'axe (41) longitudinal d'un autre conducteur (4, 19) rectiligne, reçu dans l'autre borne (10) de conducteur, soit sensiblement perpendiculaire à une droite (5) qui est orthogonale à l'axe (6) de rotation et l'axe (6) de rotation et le point (12) de serrage de l'autre première borne (10) de conducteur se coupent, une arrivée du conducteur (4, 19) dans l'autre première borne (10) de conducteur s'effectuant par le deuxième côté (8) et les points (12) de serrage des premières bornes (10) de conducteur ayant la même distance à l'axe (6) de rotation.

4. Appareil électrique (1) suivant l'une des revendications 2 à 3, dans lequel l'appareil (1) électrique comprend une deuxième borne (15) de conducteur ayant un deuxième point (17) de serrage, la deuxième borne (15) de conducteur étant constituée et disposée de manière à ce que, lorsque l'appareil (1) est à l'état relié avec le profilé (3) en chapeau par son logement (2) de profilé en chapeau, l'axe (41) longitudinal d'un conducteur rectiligne, reçu dans la deuxième borne (15) de conducteur, soit sensiblement perpendiculaire à une droite qui est orthogonale à l'axe (6) de rotation, et l'axe (6) de rotation et le point (17) de serrage de la deuxième borne (15) de conducteur se coupent, une arrivée du conducteur dans la deuxième borne (15) de conducteur s'effectuant par le deuxième côté (8) et la distance du point (17) de serrage de la deuxième borne (15) de conducteur à l'axe (6) de rotation étant différente de la distance du point (12) de serrage de la première borne (10) de conducteur à l'axe (6) de rotation.

5. Appareil (1) électrique suivant l'une des revendications précédentes, l'appareil (1) étant un appareil de coupure.

6. Système ayant une barre (14) collectrice à broches (19) de contact et un premier et un deuxième appareils (1) suivant l'une des revendications 1 à 5.
